# FASCICULE DE BREVET EUROPEEN

(11) **EP 2 334 909 B1**
(45) Date de publication et mention de la délivrance du brevet: **05.12.2012**
(21) Numéro de dépôt: 09752199.1
(22) Date de dépôt: 05.10.2009
(51) Int. Cl.: F01D 9/02, F01D 11/00, F02C 7/28, F16J 15/02

(54) **ETANCHÉITÉ ENTRE UNE CHAMBRE DE COMBUSTION ET UN DISTRIBUTEUR DE TURBINE DANS UNE TURBOMACHINE**
DICHTUNG ZWISCHEN EINER BRENNKAMMER UND EINEM TURBINENLEITAPPARAT IN EINEM TURBOMOTOR
SEALING BETWEEN A COMBUSTION CHAMBER AND A TURBINE DISTRIBUTOR IN A TURBINE ENGINE

(30) Priorité: 15.10.2008 FR 0805700
(43) Date de publication de la demande: 22.06.2011
(73) Titulaire: Snecma, 75015 Paris (FR)
(72) Inventeur: PIEUSSERGUES, Christophe, F-77370 Nangis (FR); SANDELIS, Denis, Jean,Maurice, F-77370 Nangis (FR)
(74) Mandataire: Ramey, Daniel
(86) Numéro de dépôt international: PCT/FR2009/001183
(87) Numéro de publication internationale: WO 2010/043778

(56) Documents cités:
- EP-A- 1 296 023
- WO-A-01/71175
- WO-A-2004/097270
- JP-A- 2003 148 621
- US-A- 5 470 198
- US-A1- 2003 046 940

## Description

La présente invention concerne des moyens d'étanchéité entre une chambre annulaire de combustion et un distributeur de turbine dans une turbomachine telle qu'un turboréacteur ou un turbopropulseur d'avion.

Une chambre de combustion de turbomachine comprend deux parois de révolution coaxiales respectivement interne et externe qui délimitent entre elles la chambre et dont chacune est reliée à son extrémité aval à une bride annulaire de fixation sur un carter de la turbomachine.

Un distributeur de turbine sectorisé est agencé en sortie de cette chambre et comprend une ou plusieurs plates-formes annulaires (et par exemple deux plates-formes respectivement interne et externe) qui sont reliées entre elles par des pales sensiblement radiales. Les plates-formes interne et externe du distributeur s'étendent sensiblement dans le prolongement axial des parois interne et externe de la chambre, respectivement. Les extrémités amont des plates-formes du distributeur sont séparées axialement des extrémités aval des parois de la chambre par des espaces annulaires, de façon à ce que les parois de la chambre et les plates-formes du distributeur puissent se dilater librement en fonctionnement de la turbomachine.

Des moyens d'étanchéité sont interposés axialement entre les extrémités aval des parois de la chambre et les extrémités amont des plates-formes du distributeur pour limiter le passage de gaz chauds depuis l'intérieur vers l'extérieur de la chambre à travers les espaces annulaires précités entre la chambre et le distributeur.

Un premier moyen d'étanchéité est monté entre l'extrémité aval de la paroi externe de la chambre (ou entre la bride de fixation de cette paroi) et l'extrémité amont de la plate-forme externe du distributeur pour limiter le passage de gaz chauds radialement de l'intérieur vers l'extérieur entre la chambre et le distributeur. Un second moyen d'étanchéité est monté entre l'extrémité aval de la paroi interne de la chambre (ou entre la bride de fixation de cette paroi) et l'extrémité amont de la plate-forme interne du distributeur pour limiter le passage de gaz chauds radialement de l'extérieur vers l'intérieur entre la chambre et le distributeur.

Dans la technique actuelle, chaque moyen d'étanchéité est formé par des lamelles à orientation circonférentielle qui sont disposées circonférentiellement les unes à côté des autres autour de l'axe de la chambre, chaque lamelle étant fixée sur l'extrémité amont de la plate-forme d'un secteur de distributeur et étant en appui sur l'extrémité aval de la paroi de la chambre ou sur sa bride de fixation. Chaque moyen d'étanchéité comporte en outre des couvre-joints qui sont montés entre les lamelles adjacentes pour obturer les espaces inter-lamelles et limiter ainsi le passage de gaz chauds à travers ces espaces.

Le nombre de lamelles est égal au nombre de secteurs de distributeur et chaque lamelle est fixée sur un secteur de distributeur par deux rivets et est associée à un ressort qui la sollicite axialement vers la chambre. Dans le cas où le distributeur de turbine est formé de 18 secteurs, chaque moyen d'étanchéité comporte 18 lamelles, 18 couvre-joints, 18 ressorts et 36 rivets, ce qui représente un grand nombre de pièces. Ce moyen d'étanchéité est donc relativement complexe et la durée nécessaire pour son montage est relativement longue. Par ailleurs, ces moyens d'étanchéité ne sont pas très fiables.

En effet, du fait des dilatations thermiques différentielles entre la chambre et les secteurs de distributeur et des vibrations auxquelles les différentes pièces des moyens d'étanchéité sont soumises en fonctionnement, on a constaté que les lamelles n'étaient pas toujours en appui sur la chambre, en particulier pendant des régimes transitoires de fonctionnement de la turbomachine. Les secteurs de distributeur peuvent être légèrement décalés en direction axiale les uns par rapport aux autres en fonctionnement, ce qui peut provoquer l'écartement des lamelles de la chambre et donc empêcher l'appui de ces lamelles sur la chambre. Cet appui des lamelles sur la chambre est réalisé dans la technique actuelle sur une ligne circulaire qui peut donc être interrompue à cause des phénomènes précités. On a également constaté que les couvre-joints n'assurent pas dans ce cas une bonne étanchéité entre les lamelles et que des gaz chauds peuvent passer entre ces lamelles à l'extérieur de la chambre. L'extrémité aval de la paroi de la chambre et la bride de fixation de cette paroi sont alors exposées localement à des températures importantes, ce qui crée des contraintes et augmente le risque d'apparition de criques et de fissures sur ces éléments. Le document WO 01/71175 A1 décrit un moyen d'antériorité de l'art antérieur.

L'invention a notamment pour but d'apporter une solution simple, efficace et économique à ces problèmes.

Elle propose à cet effet une turbomachine, comprenant une chambre annulaire de combustion, un distributeur de turbine sectorisé et agencé en sortie de la chambre, et des moyens d'étanchéité interposés axialement entre la chambre et le distributeur, caractérisée en ce que les moyens d'étanchéité comprennent un joint à élasticité axiale comportant des moyens d'appui axial sur une extrémité aval de la chambre et une lèvre annulaire aval qui est sectorisée, chaque secteur de cette lèvre aval étant alignée avec un secteur de distributeur et comportant des moyens d'appui axial sur une extrémité amont du secteur de distributeur.

Le joint d'étanchéité selon l'invention comprend à la fois des moyens d'appui élastique sur la chambre et des moyens d'appui élastique sur les secteurs de distributeur, qui assurent une bonne étanchéité entre la chambre et le distributeur. Les moyens d'appui sur la chambre peuvent être formés par une lèvre annulaire amont qui n'est pas sectorisée et qui est en appui, sur la chambre de façon continue sur toute la circonférence de la chambre. Les moyens d'appui sur le distributeur sont formés par une lèvre annulaire aval sectorisée et dont les secteurs sont en appui sur les secteurs de distributeur sur une ligne ou une surface circonférentielle. Les secteurs de la lèvre peuvent se déplacer librement indépendamment les uns des autres et peuvent donc suivre les déplacements des secteurs de distributeur en fonctionnement en maintenant un appui permanent sur ces secteurs.

Le joint selon l'invention est par ailleurs une pièce indépendante interposée entre la chambre et le distributeur. Il ne nécessite pas de moyens de montage ou de fixation particuliers.

Un joint d'étanchéité selon l'invention peut être monté entre l'extrémité aval de chaque paroi (ou la bride de fixation de cette paroi) et l'extrémité amont de la plate-forme correspondante du distributeur. Les deux joints sont alors coaxiaux, le joint d'étanchéité situé radialement à l'intérieur ayant un diamètre inférieur à celui situé radialement à l'extérieur.

Selon une autre caractéristique de l'invention, le joint est monté précontraint axialement à froid entre la chambre et le distributeur. Les secteurs de la lèvre aval étant déformables élastiquement indépendamment les uns des autres, le joint permet d'assurer une bonne étanchéité entre la chambre et le distributeur dans toutes les conditions de fonctionnement tout en autorisant des déplacements relatifs de ces éléments dus aux dilatations thermiques différentielles et aux vibrations auxquelles ils sont soumis.

Le joint est préférentiellement formé d'une seule pièce annulaire. Il est donc facile à monter et à remplacer en cas d'usure. Il peut avoir en section une forme en V, W, WV, WW ou Ω. Les lèvres du joint sont par exemple reliées entre elles par une portion annelée du joint de façon à former un joint à section en W, WV, WW.

Les moyens d'appui axial de chaque lèvre du joint comportent avantageusement une surface d'appui annulaire ayant une forme arrondie convexe. Le joint est en appui sur la chambre et le distributeur par des surfaces annulaires et non pas par un simple appui linéaire, comme dans la technique antérieure. L'appui du joint sur ces éléments se fait donc sur une surface plus étendue que dans la technique antérieure, ce qui améliore de façon notable l'étanchéité entre la chambre et le distributeur.

Les moyens d'appui axial des lèvres peuvent être formés au niveau des parties d'extrémité libres de ces lèvres, ces parties d'extrémité ayant en section une forme incurvée dont les convexités sont orientées sensiblement dans des directions opposées, par exemple vers l'amont pour la lèvre amont et vers l'aval pour la lèvre aval.

Le joint peut en outre comporter des moyens d'appui radial sur la chambre et/ou le distributeur pour assurer son centrage. L'appui du joint sur la chambre et le distributeur, en direction axiale et radiale, suffit à maintenir le joint en position. Ce joint ne nécessite donc pas de moyens de fixation particuliers du type rivets ou analogues.

La lèvre aval du joint peut comporter un nombre de secteurs égal ou supérieur au nombre de secteurs de distributeur.

Les secteurs de la lèvre aval sont préférentiellement définis par des fentes traversantes calibrées de cette lèvre. Les dimensions de ces fentes sont notamment déterminées pour autoriser de manière contrôlée le passage d'air de refroidissement depuis l'extérieur vers l'intérieur de la chambre. Le joint peut en outre comporter des orifices calibrés de passage d'air de ventilation.

L'extrémité aval de la chambre et/ou l'extrémité amont du distributeur peuvent comporter des orifices de passage d'air pour l'alimentation en air de l'enceinte annulaire dans laquelle est logé le joint et/ou pour l'évacuation de l'air de cette enceinte.

L'invention concerne également un joint annulaire d'étanchéité à élasticité axiale pour une turbomachine telle que décrite ci-dessus, caractérisé en ce qu'il est formé d'une seule pièce et comporte deux lèvres annulaires dont une comporte des fentes radiales traversantes définissant entre elles des secteurs de lèvre qui peuvent se déplacer librement indépendamment les uns des autres. Ce joint peut comporter tout ou partie des caractéristiques précitées du joint décrit ci-dessus en relation avec une turbomachine.

L'invention sera mieux comprise et d'autres caractéristiques, détails et avantages de la présente invention apparaîtront plus clairement à la lecture de la description suivante faite à titre d'exemple non limitatif et en référence aux dessins annexés dans lesquels :
- la figure 1 est une demi-vue schématique en coupe axiale d'une chambre de combustion et d'un distributeur de turbine d'une turbomachine, entre lesquels sont montés des moyens d'étanchéité selon la technique antérieure ;
- la figure 2 est une vue à plus grande échelle d'une partie de la figure 1 ;
- la figure 3 est une demi-vue schématique en coupe axiale de joints annulaire d'étanchéité selon l'invention, montés entre une chambre de combustion et un distributeur de turbine d'une turbomachine ;
- la figure 4 est une vue schématique partielle de face et à plus grande échelle d'un des joints d'étanchéité de la figure 3, vu depuis l'aval ;
- la figure 5 est une vue en coupe selon la ligne V-V de la figure 4 ;
- les figures 6 à 9 sont des demi-vues schématiques partielles en coupe axiale d'une turbomachine équipée de variantes de réalisation du joint annulaire d'étanchéité selon l'invention ;
- la figure 10 est une demi-vue schématique en coupe axiale d'une autre variante de réalisation du joint d'étanchéité selon l'invention.

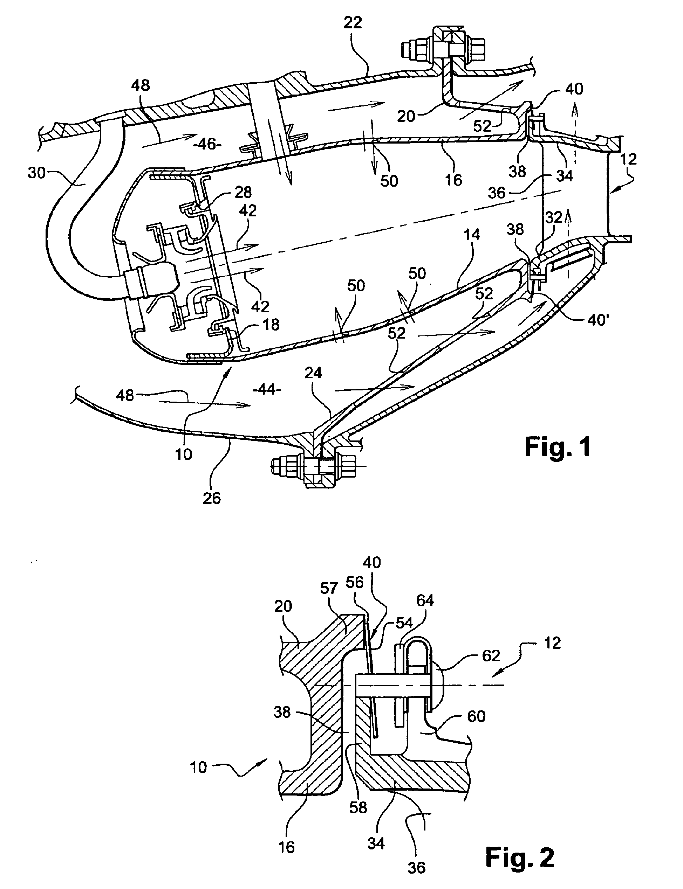

On se réfère d'abord à la figure 1 qui représente une chambre annulaire de combustion 10 d'une turbomachine, telle qu'un turboréacteur ou un turbopropulseur d'avion, qui est agencée en aval d'un compresseur et d'un diffuseur (non représentés), et en amont d'un distributeur 12 d'entrée d'une turbine haute-pression 10.

La chambre de combustion 10 comprend des parois de révolution interne 14 et externe 16 qui s'étendent l'une à l'intérieur de l'autre et qui sont reliées en amont à une paroi annulaire 18 de fond de chambre. La paroi externe 16 de la chambre est reliée à son extrémité aval à une bride annulaire externe 20 qui est fixée à sa périphérie externe sur un carter externe 22 de la chambre, et sa paroi interne 14 est reliée à son extrémité aval à une bride annulaire interne 24 qui est fixée à sa périphérie interne sur un carter interne 26 de la chambre.

La paroi annulaire 18 de fond de chambre comporte des ouvertures 28 à travers lesquelles passe de l'air provenant du compresseur et du carburant amené par des injecteurs 30 fixés sur le carter externe 22.

Le distributeur 12 est fixé en aval de la chambre par des moyens appropriés et comprend des plates-formes annulaires interne 32 et externe 34 qui s'étendent l'une à l'intérieur de l'autre et qui sont reliées entre elles par des pales 36 sensiblement radiales. La plate-forme externe 34 du distributeur 12 est alignée axialement avec la partie d'extrémité aval de la paroi externe 16 de la chambre, et sa plate-forme interne 32 est alignée axialement avec la partie d'extrémité aval de la paroi interne 14 de la chambre.

Ce distributeur 12 est sectorisé et formé de plusieurs secteurs disposés les uns à côté des autres sur une circonférence centrée sur l'axe de révolution de la chambre. Les secteurs de distributeur sont par exemple au nombre de 18.

Les plates-formes 32, 34 du distributeur délimitent avec les brides 20, 24 de fixation de la chambre deux espaces annulaires 38, respectivement interne et externe, qui débouchent à une de leurs extrémités à l'intérieur de la chambre et qui sont fermés à l'autre de leurs extrémités par des moyens d'étanchéité 40, 40' montés entre les plates-formes 32, 34 et les brides 20, 24.

Une partie du débit d'air fourni par le compresseur situé en amont passe par les ouvertures 28 de la paroi 18 et alimente la chambre de combustion 10 (flèches 42), l'autre partie du débit d'air alimentant des veines annulaires interne 44 et externe 46 de contournement de la chambre (flèches 48).

La veine interne 44 est formée entre le carter interne 26 et la paroi interne 14 de la chambre, et l'air qui passe dans cet espace se partage en un débit qui pénètre dans la chambre 10 par des orifices 50 de la paroi interne 14, et en un débit qui passe à travers des trous 52 de la bride interne 24 de la chambre pour aller notamment refroidir le moyen d'étanchéité interne 40' et la périphérie externe de la bride 24 reliée à la paroi 14 de la chambre. Une partie de l'air qui passe à travers la bride 24 traverse ensuite le distributeur 12 en passant radialement de l'intérieur vers l'extérieur à travers des cavités internes des pales 36 du distributeur.

La veine externe 46 est formée entre le carter externe 22 et la paroi externe 16 de la chambre, et l'air qui passe dans cet espace se partage en un débit qui pénètre dans la chambre 10 par des orifices 50 de la paroi externe 16 et en un débit qui passe à travers des trous 52 de la bride externe 20 et s'ajoute au débit d'air qui traverse les pales 36 du distributeur, cet air permettant notamment de refroidir le moyen d'étanchéité externe 40 et la périphérie interne de la bride 20.

La figure 2 est une vue à plus grande échelle du moyen d'étanchéité externe 40. Ce moyen 40 comprend des lamelles 54 qui sont disposées circonférentiellement les unes à côté des autres autour de l'axe longitudinal de la chambre, et sur lesquelles sont montés des couvre-joints (non visibles). Chaque lamelle 54 est formée par une petite plaque plane à orientation circonférentielle qui s'étend sensiblement vers l'amont et vers l'intérieur en position de montage. Elle est fixée par rivetage au niveau de sa partie médiane sur un secteur de distributeur 12 et prend appui par son bord périphérique externe 56 sur une face radiale d'un rebord cylindrique 57 de la bride 20.

La plate-forme 34 du secteur de distributeur 12 comporte à son extrémité amont deux parois radiales 58, 60 espacées axialement l'une de l'autre et servant au montage du moyen 40. Ces parois 58, 60 comportent des orifices axiaux de passage des rivets 62 de fixation des lamelles 54.

La paroi 58 la plus amont de la plate-forme 34 délimite l'espace annulaire 38 avec la bride 20 de fixation de la paroi 16. Le moyen 40 est monté entre les deux parois 58, 60. Il est en appui sur la face radiale aval de la paroi 58 et est sollicité vers l'amont par un ressort 64 monté entre le moyen et la paroi 60 de la plate-forme 34.

Le moyen d'étanchéité interne 40' est similaire au moyen d'étanchéité externe 40. L'étanchéité conférée par ces moyens n'est toutefois pas satisfaisante, comme cela est décrit plus haut.

L'invention apporte une solution simple aux problèmes de la technique antérieure grâce à un joint annulaire monobloc qui comprend des moyens d'appui axial sur la chambre 10 et sur le distributeur 12 et qui ne nécessite pas de moyens particuliers de montage et/ou de fixation sur la chambre et le distributeur.

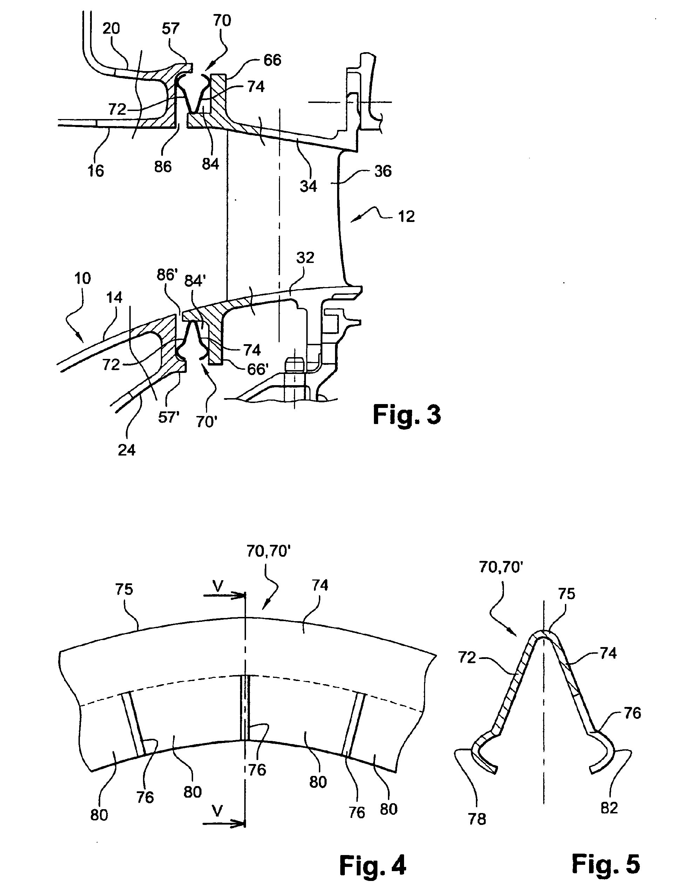

Dans l'exemple de réalisation représenté aux figures 3 à 5, ce joint 70, 70' a en section une forme sensiblement en V et comporte deux lèvres annulaires amont 72 et aval 74 destinées à être en appui axial sur la chambre 10 et le distributeur 12, respectivement. Les lèvres 72, 74 sont reliées entre elles par une partie médiane 75 du joint de forme arrondie. Le joint d'étanchéité externe 70 est monté de façon à ce que son ouverture débouche radialement vers l'extérieur, et le joint interne 70' est monté de façon à ce que son ouverture débouche radialement vers l'intérieur.

La lèvre amont 72 du joint est continue sur 360° (c'est-à-dire qu'elle n'est pas sectorisée) et comprend à proximité de son bord périphérique libre (opposé à la partie médiane 75) des moyens annulaires 78 d'appui axial sur la chambre 10.

Les moyens d'appui 78 de la lèvre 72 du joint ont en section une forme en C dont la convexité est orientée axialement vers l'amont, c'est-à-dire du côté de la chambre 10. Ces moyens d'appui présentent ainsi du côté amont une surface annulaire incurvée convexe qui est destinée à venir en appui axial sur la bride 20 de la chambre.

La lèvre aval 74 du joint est sectorisée, cette sectorisation étant obtenue par une pluralité de fentes radiales 76 formées dans la lèvre 74 depuis son bord périphérique libre. Ces fentes 76 sont régulièrement réparties autour de l'axe du joint et s'étendent par exemple sur la moitié environ de la dimension radiale de la lèvre 74.

Le joint 70, 70' est élastiquement déformable, en particulier en direction axiale, de façon à ce que ses lèvres 72, 74 puissent être écartées et rapprochées élastiquement l'une de l'autre en fonctionnement, et que les secteurs 80 de la lèvre aval (délimités par les fentes 76 et les traits pointillés en figure 4) puissent être déplacés axialement vers l'amont et vers l'aval indépendamment des autres secteurs de cette lèvre.

Le nombre de ces secteurs 80 est de préférence égal au nombre de secteurs de distributeur 12 et chaque secteur 80 a une étendue angulaire autour de l'axe du joint sensiblement égale à celle d'un secteur de distributeur 12. Chaque secteur 80 de la lèvre 74 est aligné en direction axiale avec un secteur de distributeur 12 pour que chaque secteur 80 coopère et soit en appui sur un unique secteur de distributeur 12. Pour éviter que le joint 70, 70' ne se déplace en direction circonférentielle en fonctionnement et que les secteurs 80 de la lèvre 74 soient décalés en direction axiale par rapport aux secteurs de distributeur 12, des moyens d'anti-rotation du joint, du type ergot ou analogue, peuvent être prévus sur le joint pour coopérer avec un moyen complémentaire de la chambre ou du distributeur, ou inversement.

Chaque secteur 80 de la lèvre 74 comprend au voisinage de son bord périphérique libre des moyens 82 d'appui axial sur un secteur de distributeur 12. Ces moyens d'appui 82 ont en section une forme en C dont la convexité est orientée axialement vers l'aval, du côté du distributeur 12. Ils présentent donc du côté aval une surface annulaire incurvée convexe destinée à venir en appui sur les secteurs de distributeur 12.

Dans l'exemple représenté, la plate-forme externe 34 du distributeur 12 comprend au voisinage de son extrémité amont une paroi annulaire radiale 66 qui définit avec une portion annulaire radiale de la bride 20 une enceinte annulaire 84 dans laquelle est logé le joint externe 70. Cette enceinte 84 est en partie délimitée radialement à sa périphérie externe par un rebord cylindrique 57 de la bride 20 et à sa périphérie interne par la partie d'extrémité amont de la plate-forme 34 du distributeur 12.

Le rebord 57 de la bride 20 est espacé axialement de la paroi 66 du distributeur pour autoriser le passage d'air de refroidissement dans l'enceinte 84. L'extrémité aval de la paroi 16 de la chambre est en outre séparée par un jeu axial 86 de l'extrémité amont de la plate-forme 34 du distributeur 12 pour l'évacuation de l'air de cette enceinte 84, comme cela sera décrit plus en détail dans ce qui suit.

Le joint externe 70 comprend des moyens d'appui radial sur le rebord 57 de la bride 20 et sur la partie d'extrémité amont de la plate-forme externe 34 du distributeur de façon à assurer le centrage du joint et son immobilisation en direction radiale dans l'enceinte annulaire 84. Le joint 70 est ici en appui radial par la périphérie externe de sa lèvre amont 72 sur le rebord 57 et par sa partie médiane 75 sur la plate-forme 34.

De la même façon, le joint interne 70' est logé dans une enceinte annulaire 84' définit du côté amont par une portion annulaire radiale de la bride 24, du côté aval par une paroi annulaire radiale 66' de la plate-forme interne 32 du distributeur 12, du côté intérieur par la partie d'extrémité amont de cette plate-forme 32, et du côté extérieur par un rebord cylindrique 57' de la bride 24. Le rebord 57' est séparé de la plate-forme 32 par un jeu axial 86'. Le joint 70' est en appui par la périphérie interne de sa lèvre amont 72 sur le rebord cylindrique 57 de la bride 24, et par sa partie médiane 75 sur la partie d'extrémité amont de la plate-forme 32 du distributeur.

Le montage des joints 70, 70' peut être réalisé de façon simple en déplaçant en translation axiale chaque joint vers le distributeur 12 jusqu'à ce que ce joint prenne appui axialement sur la face radiale amont de la paroi 66, 66' de la plate-forme correspondante du distributeur (le joint 70 est alors en appui sur la surface extérieure de la plate-forme 34 et le joint 70' est en appui sur la surface intérieure de la plate-forme 32). Le distributeur 12 est ensuite monté en sortie de la chambre et est fixé par des moyens appropriés sur des carters de la turbomachine. Les joints 70, 70' sont alors en appui axial sur les portions radiales de la bride 20, 24 correspondante et en appui radial sur le rebord cylindrique 57, 57' de cette bride.

En fonctionnement, les joints 70, 70' peuvent se déformer en direction axiale et radiale pour autoriser les dilatations thermiques différentielles entre la chambre 10 et les secteurs de distributeur 12. Ils restent toutefois en appui constant sur la chambre et les secteurs de distributeur. Chaque secteur 80 de la lèvre aval 74 du joint 70, 70' est en appui axial sur un unique secteur de distributeur et peut donc suivre les déplacements de ce secteur de distributeur 12 sans être gêné par les secteurs de lèvre ou de distributeur adjacents.

Les fentes 76 de cette lèvre aval 74 sont calibrées, c'est-à-dire que leurs formes et leur dimensions sont déterminées notamment pour laisser passer un débit d'air de ventilation et de refroidissement donné depuis l'extérieur vers l'intérieur de la chambre, cet air provenant du compresseur de la turbomachine, comme indiqué ci-dessus en référence à la figure 1. Cet air participe alors de façon contrôlée au refroidissement du joint 70, 70' ainsi qu'à celui de la partie d'extrémité amont de la plate-forme 32, 34 correspondante du distributeur 12.

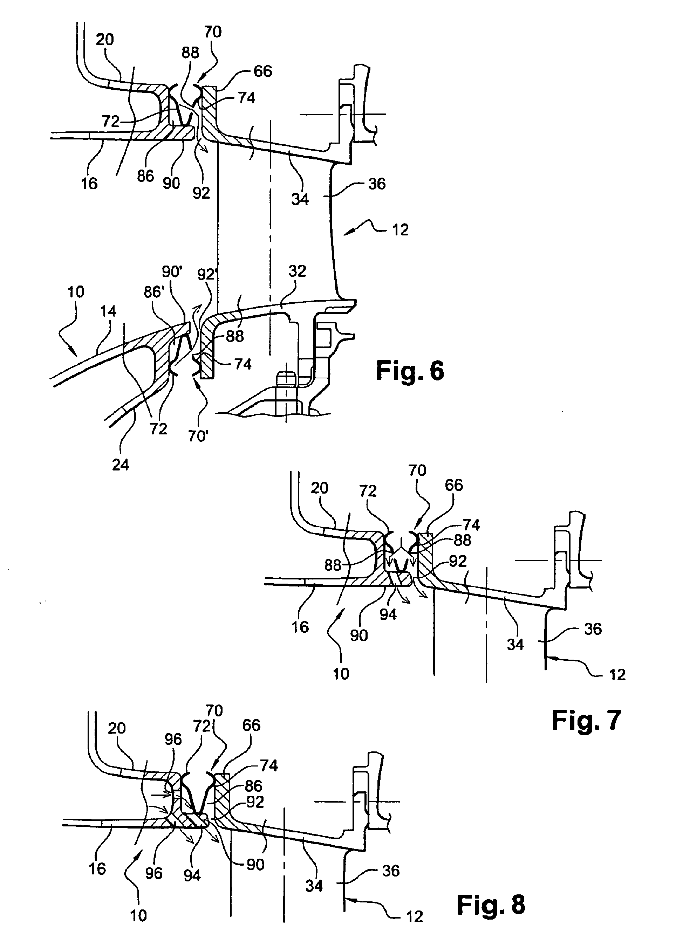

Dans la variante de réalisation de la figure 6, les joints 70, 70' comprennent des orifices 88 calibrés de passage d'air de ventilation, ces orifices 88 étant ici formés sur la lèvre aval 74 du joint.

Les joints 70,70' sont ici en appui radial uniquement sur un rebord cylindrique 90, 90' de la chambre 10, qui s'étend vers l'aval depuis l'extrémité aval de la paroi correspondante 14, 16 de la chambre. Le joint externe 70 est en appui axial vers l'intérieur sur le rebord 90 de la paroi externe 16 et le joint interne 70' est en appui axial vers l'extérieur sur le rebord 90' de la paroi interne 14. L'extrémité aval de ce rebord 90, 90' est séparée de l'extrémité amont de la plate-forme du distributeur 12 par un jeu axial 92, 92' pour l'évacuation de l'air de ventilation passant à travers les orifices 88 et les fentes 76 du joint.

L'air qui traverse les orifices 88 et les fentes 76 du joint passe en effet par le jeu axial 92, 92' pour former un film d'air de ventilation qui est injecté au niveau des extrémités radialement interne et externe des pales 36 du distributeur et qui est destinée à s'écouler le long des plates-formes 32, 34 du distributeur 12.

Dans la variante de la figure 7, le rebord 90 de la paroi externe 16 de la chambre comprend des perçages 94 calibrés pour l'évacuation de l'air de ventilation. Les deux lèvres 72, 74 du joint 70 comportent ici des orifices 88 calibrés de passage de cet air. Les orifices 88 de la lèvre amont 72 alimentent en air les perçages 94 du rebord 90, et les orifices 88 et les fentes 76 de la lèvre aval 74 alimentent en air le jeu axial 92 entre le rebord 90 et l'extrémité amont de la plate-forme 34 du distributeur.

Dans la variante de la figure 8, le joint 70 est dépourvu d'orifices de passage d'air de ventilation. L'extrémité aval de la paroi externe 16 de la chambre 10 et la périphérie interne de la bride 20 comprennent des perçages 94, 96 de passage d'air de ventilation provenant de la veine 46 précitée décrite en référence à la figure 1. Les perçages 96 formés dans la portion radiale de la bride 20 débouchent dans l'enceinte annulaire 86 de logement du joint 70 et alimentent en air les perçages 94 formés dans le rebord cylindrique aval 90 de la paroi externe 16. Les perçages 96 formés dans la paroi externe 16, en amont de son rebord 90, débouchent directement à l'intérieur de la chambre.

Dans ce cas, l'air qui passe à travers les fentes calibrées 76 de la lèvre aval 74 du joint alimente le jeu axial 92 entre le rebord 90 et l'extrémité amont de la plate-forme 34 du distributeur.

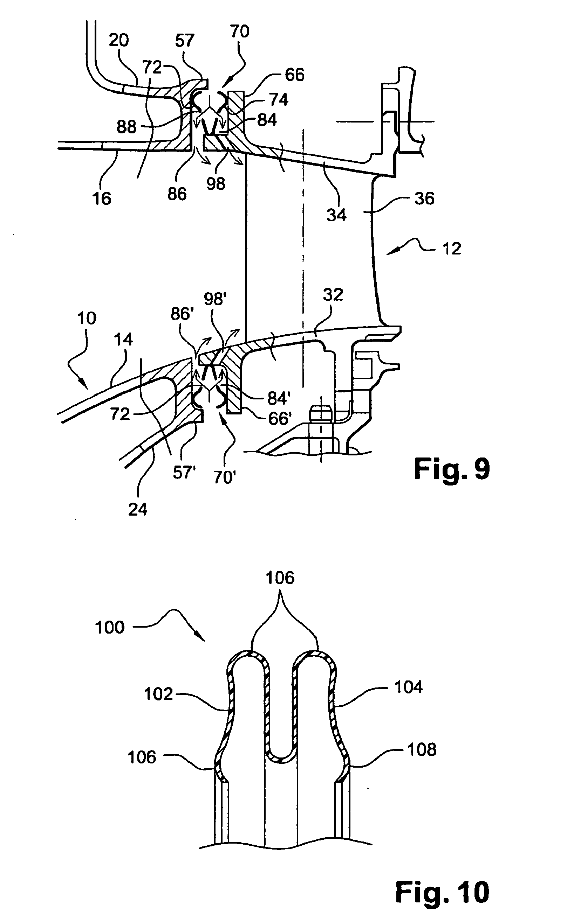

La variante de réalisation de la figure 9 diffère de celle de la figure 3 en ce que les lèvres 72, 74 du joint 70, 70' comportent des orifices 88 calibrés de passage d'air, les orifices de la lèvre amont 72 alimentant en air le jeu axial 86 entre la chambre 10 et le distributeur 12 et les orifices de la lèvre aval 74 alimentant en air des perçages 98, 98' formés dans la partie d'extrémité amont de la plate-forme du distributeur.

La figure 10 est une demi-vue schématique en coupe axiale d'une variante de réalisation du joint d'étanchéité 100 selon l'invention. Ce joint 100 a en section une forme en W dont l'ouverture débouche radialement vers l'intérieur. Il comporte deux lèvres annulaires, respectivement amont 102 et aval 104, qui sont reliées entre elles par une partie médiane 106 du joint qui est annelée. Ce joint est également déformable élastiquement en direction axiale. Les lèvres 102, 104 comportent à proximité de leurs périphéries internes des moyens 106, 108 d'appui axial du type précité. La lèvre aval 104 est en outre fendue radialement en plusieurs points pour définir plusieurs secteurs circonférentiels du type précité.

Dans une autre variante non représentée, le joint selon l'invention peut avoir en section une forme en WV ou WW et comporter une partie annelée du type précité, qui comporte plusieurs anneaux coaxiaux afin d'améliorer les capacités de déformation élastique du joint en direction axiale.

Dans encore une autre variante non représentée, le joint peut avoir en section une forme en Ω.

## Revendications

1. Turbomachine, comprenant une chambre annulaire (10) de combustion, un distributeur (12) de turbine sectorisé et agencé en sortie de la chambre, et des moyens d'étanchéité interposés axialement entre la chambre et le distributeur, **caractérisée en ce que** les moyens d'étanchéité comprennent un joint annulaire (70, 70') à élasticité axiale comportant des moyens (78) d'appui axial sur une extrémité aval de la chambre et une lèvre annulaire aval (74) qui est sectorisée, chaque secteur (80) de cette lèvre aval étant aligné avec un secteur de distributeur et comportant des moyens (82) d'appui axial sur une extrémité amont du secteur de distributeur.

2. Turbomachine selon la revendication 1, **caractérisée en ce que** le joint (70, 70') est monté précontraint axialement à froid entre la chambre (10) et le distributeur (12).

3. Turbomachine selon la revendication 1 ou 2, **caractérisée en ce que** les moyens (78) d'appui axial sur la chambre sont formés par une lèvre annulaire amont (72) du joint.

4. Turbomachine selon la revendication 3, **caractérisée en ce que** les moyens (78, 82) d'appui axial des lèvres du joint (70, 70') comportent une surface d'appui annulaire ayant une forme arrondie convexe.

5. Turbomachine selon la revendication 3 ou 4, **caractérisée en ce que** les moyens (78, 82) d'appui axial des lèvres du joint (70, 70') sont formés au niveau des parties d'extrémité libres de ces lèvres.

6. Turbomachine selon l'une des revendications 3 à 5, **caractérisée en ce que** les lèvres (102, 104) du joint 100) sont reliées entre elles par une portion annelée (106).

7. Turbomachine selon l'une des revendications précédentes, **caractérisée en ce que** la lèvre aval (74) du joint (70, 70') comporte un nombre de secteurs (80) égal ou supérieur au nombre de secteurs de distributeur.

8. Turbomachine selon l'une des revendications précédentes, **caractérisée en ce que** les secteurs (80) de la lèvre aval (74) sont définis par des fentes (76) traversantes calibrées de cette lèvre.

9. Turbomachine selon l'une des revendications précédentes, **caractérisée en ce que** le joint (70, 70') est d'une seule pièce.

10. Turbomachine selon l'une des revendications précédentes, **caractérisée en ce que** le joint (70, 70', 100) a en section une forme en V, W, WV, WW ou Ω.

11. Turbomachine selon l'une des revendications précédentes, **caractérisée en ce que** le joint (70, 70') comporte des moyens (75) d'appui radial sur la chambre (10) et/ou le distributeur (12) pour son centrage.

12. Turbomachine selon l'une des revendications précédentes, **caractérisée en ce que** le joint (70, 70') comporte des orifices (88) calibrés de passage d'air de ventilation.

13. Turbomachine selon l'une des revendications précédentes, **caractérisée en ce que** l'extrémité aval de la chambre (10) et/ou l'extrémité amont du distributeur (12) comportent des orifices (94, 96, 98) de passage d'air pour l'alimentation en air d'une enceinte annulaire (84, 84') dans laquelle est logé le joint (70, 70') et/ou pour l'évacuation de l'air de cette enceinte.

14. Joint annulaire (70, 70') d'étanchéité à élasticité axiale pour une turbomachine selon l'une des revendications précédentes, **caractérisé en ce qu'**il est formé d'une seule pièce et comporte deux lèvres annulaires (72, 74) dont une comporte des fentes radiales traversantes (76) définissant entre elles des secteurs de lèvre (80) qui peuvent se déplacer librement indépendamment les uns des autres.

15. Joint selon la revendication 14, **caractérisé en ce qu'**il a en section une forme en V, W, WV, WW ou Ω.

## Claims

1. A turbomachine having an annular combustion chamber (10), a sectorized turbine nozzle (12) arranged at the outlet from the chamber, and sealing means interposed axially between the chamber and the nozzle, the turbomachine being **characterized in that** the sealing means comprise an annular gasket (70, 70') that is axially resilient, the gasket including axial bearing means (78) for bearing against a downstream end of the chamber and a downstream annular lip (74) that is sectorized, each sector (80) of the downstream lip being in alignment with a sector of the nozzle and including axial bearing means (82) for bearing against an upstream end of the nozzle sector.

2. A turbomachine according to claim 1, **characterized in that** the gasket (70, 70') is mounted with cold axial prestress between the chamber (10) and the nozzle (12).

3. A turbomachine according to claim 1 or claim 2, **characterized in that** the axial bearing means (78) for bearing against the chamber are formed by an upstream annular lip (72) of the gasket.

4. A turbomachine according to claim 3, **characterized in that** the axial bearing means (78, 82) of the lips of the gaskets (70, 70') comprise respective annular bearing surfaces of convex rounded shape.

5. A turbomachine according to claim 3 or claim 4, **characterized in that** the axial bearing means (78, 82) of the lips of the gasket (70, 70') are formed at the free end portions of said lips.

6. A turbomachine according to any one of claims 3 to 5, **characterized in that** the lips (102, 102) of the gasket (100) are connected together by a corrugated portion (106).

7. A turbomachine according to any preceding claim, **characterized in that** the downstream lip (74) of the gasket (70, 70') includes a number of sectors (80) that is equal to or greater than the number of nozzle sectors.

8. A turbomachine according to any preceding claim, **characterized in that** the sectors (80) of the downstream lip (74) are defined by calibrated through slots (76) in said lip.

9. A turbomachine according to any preceding claim, **characterized in that** the gasket (70, 70') comprises a single part.

10. A turbomachine according to any preceding claim, **characterized in that** the gasket (70, 70', 100) presents a section that is V-, W-, WV-, WW-, or Ω-shape.

11. A turbomachine according to any preceding claim, **characterized in that** the gasket (70, 70') includes radial bearing means (75) for bearing against the chamber (10) and/or the nozzle (12) for centering the gasket.

12. A turbomachine according to any preceding claim, **characterized in that** the gasket (70, 70') includes calibrated orifices (88) for passing ventilation air.

13. A turbomachine according to any preceding claim, **characterized in that** the downstream end of the chamber (10) and/or the upstream end of the nozzle (12) includes air-passing orifices (94, 96, 98) for feeding air to an annular enclosure (84, 84') in which the gasket (70, 70') is housed and/or for discharging air from said enclosure.

14. An axially-resilient annular sealing gasket (70, 70') for a turbomachine according to any preceding claim, the gasket being **characterized in that** it is made as a single part and includes two annular lips (72, 74), one of which includes radial through slots (76) defining, between them, lip sectors (80) that are capable of moving freely independently of one another.

15. A gasket according to claim 14, **characterized in that** it presents a section that is V-, W-, WV-, WW-, or Ω-shape.

## Patentansprüche

1. Turbomaschine mit einer ringförmigen Brennkammer (10), einem in Sektoren unterteilten Turbinenleitapparat (12), der am Ausgang der Kammer angeordnet ist, und mit Dichtmitteln, die axial zwischen Kammer und Leitapparat eingesetzt sind, **dadurch gekennzeichnet, dass** die Dichtmittel eine axial elastische Ringdichtung (70, 70') aufweisen, die Abstützmittel (78) zur axialen Abstützung an einem stromabwärtigen Ende der Kammer und eine stromabwärtige, ringförmige Lippe (74) enthält, welche in Sektoren unterteilt ist, wobei jeder Sektor (80) dieser stromabwärtigen Lippe mit einem Leitapparatsektor ausgerichtet ist und Abstützmittel (82) zur axialen Abstützung an einem stromaufwärtigen Ende des Leitapparatsektors aufweist.

2. Turbomaschine nach Anspruch 1, **dadurch gekennzeichnet, dass** die Dichtung (70, 70') im Kaltzustand axial vorgespannt zwischen Kammer (10) und Leitapparat (12) montiert wird.

3. Turbomaschine nach Anspruch 1 oder 2, **dadurch gekennzeichnet, dass** die Abstützmittel (78) zur axialen Abstützung an der Kammer aus einer stromaufwärtigen, ringförmigen Lippe (72) der Dichtung gebildet sind.

4. Turbomaschine nach Anspruch 3, **dadurch gekennzeichnet, dass** die Abstützmittel (78, 82) zur axialen Abstützung der Lippen der Dichtung (70, 70') eine ringförmige Abstützfläche mit einer konvex abgerundeten Form aufweisen.

5. Turbomaschine nach Anspruch 3 oder 4, **dadurch gekennzeichnet, dass** die Abstützmittel (78, 82) zur axialen Abstützung der Lippen der Dichtung (70, 70') im Bereich der freien Endabschnitte dieser Lippen ausgebildet sind.

6. Turbomaschine nach einem der Ansprüche 3 bis 5, **dadurch gekennzeichnet, dass** die Lippen (102, 104) der Dichtung (100) über einen gewellten Abschnitt (106) miteinander verbunden sind.

7. Turbomaschine nach einem der vorangehenden Ansprüche, **dadurch gekennzeichnet, dass** die stromabwärtige Lippe (74) der Dichtung (70, 70') eine Anzahl von Sektoren (80) aufweist, die gleich oder größer als die Anzahl von Sektoren des Leitapparats ist.

8. Turbomaschine nach einem der vorangehenden Ansprüche, **dadurch gekennzeichnet, dass** die Sektoren (80) der stromabwärtigen Lippe (74) von durchgehenden, kalibrierten Schlitzen (76) dieser Lippe definiert werden.

9. Turbomaschine nach einem der vorangehenden Ansprüche, **dadurch gekennzeichnet, dass** die Dichtung (70, 70') aus einem Stück besteht.

10. Turbomaschine nach einem der vorangehenden Ansprüche, **dadurch gekennzeichnet, dass** die Dichtung (70, 70', 100) im Querschnitt V-, W-, WV-, WW- oder Ω-förmig ist.

11. Turbomaschine nach einem der vorangehenden Ansprüche, **dadurch gekennzeichnet, dass** die Dichtung (70, 70') zu deren Zentrierung Abstützmittel (75) zur radialen Abstützung an der Kammer (10) und/oder am Leitapparat aufweist.

12. Turbomaschine nach einem der vorangehenden Ansprüche, **dadurch gekennzeichnet, dass** die Dichtung (70, 70') kalibrierte Öffnungen (88) zum Durchtritt von Ventilationsluft aufweist.

13. Turbomaschine nach einem der vorangehenden Ansprüche, **dadurch gekennzeichnet, dass** das stromabwärtige Ende der Kammer (10) und/oder das stromaufwärtige Ende des Leitapparats (12) Öffnungen (94, 96, 98) zum Durchtritt von Luft für die Luftversorgung eines ringförmigen Raums (84, 84'), in welchen die Dichtung (79, 70') aufgenommen ist, und/oder zum Ableiten von Luft aus diesem Raum aufweist bzw. aufweisen.

14. Axial elastische Ringdichtung (70, 70') für eine Turbomaschine nach einem der vorangehenden Ansprüche, **dadurch gekennzeichnet, dass** sie aus einem Stück ausgebildet ist und zwei ringförmige Lippen (72, 74) aufweist, von denen die eine radial verlaufende, durchgehende Schlitze (76) aufweist, die Lippensektoren (80) zwischen sich definieren, welche sich unabhängig voneinander frei verlagern können.

15. Dichtung nach Anspruch 14, **dadurch gekennzeichnet, dass** sie im Querschnitt V-, W-, WV-, WW- oder Ω-förmig ist.
